# EUROPEAN PATENT APPLICATION

(11) **EP 4 378 673 A1**
(43) Date of publication of application: **05.06.2024**
(21) Application number: 22210810.2
(22) Date of filing: 01.12.2022
(51) Int. Cl.: B29C 70/54, B29C 70/02, B29C 70/08, B29C 70/22, B29C 70/44, B29C 70/88, B32B 5/02, B32B 5/12, B32B 5/26, D03D 9/00, F03D 1/06, B29L 31/08

(54) **DISTRIBUTION MESH FOR A COMPOSITE ELEMENT, AND MANUFACTURING METHOD**

(71) Applicant: Siemens Gamesa Renewable Energy A/S, 7330 Brande (DK)
(72) Inventor: Ischtschuk, Lars, 9200 Aalborg (DK); Netzel, Christian, 28217 Bremen (DE); Olesen, Bendt, 9270 Klarup (DK)
(74) Representative: SGRE-Association

(57) **Abstract**

Distribution mesh (20) for fabricating a composite element, wherein the distribution mesh (20) comprises a distribution material (21) comprising at least one epoxy-compatible and/or a group reactive towards epoxy group.

## Description

### Field of invention

The present invention relates to a distribution mesh for fabricating a composite element as well as to a composite element comprising such distribution mesh. Furthermore, the invention relates to a wind turbine comprising at least one composite element with such distribution mesh. Also, the invention relates to a fabrication method for a composite element comprising the substitution mesh.

Thus, the present invention may relate to the technical field of manufacturing a composite element, in particular for a wind turbine.

### Art Background

Composite elements are used during the fabrication and the assembly of finished products. A specific fabrication method, namely vacuum infusion, from the context of composite element manufacture for wind turbines is described in the following.

Said method for fabricating composite elements comprises the steps of i) placing a composite stack on a composite part to be built, and ii) placing a release fabric on top of the composite and on top of the composite stack. Preferably, a distribution mesh is applied on the composite stack. Thereby, an improved flow of the resin, which forms the composite element in the composite stack, is allowed.

Then, a vacuum foil sealed with sealing tape is then used to create a vacuum bag comprising the composite stack, the release fabric and the distribution mesh. A vacuum is applied to one outlet of the vacuum foil in order to realize a flow of an uncured resin from a flow inlet inside of the vacuum bag.

Once the uncured resin is flown into the vacuum bag, it will be (homogenously) distributed by the distribution mesh.

After curing of the resin, the release fabric is detached to thereby remove the vacuum foil and to yield the finished composite element.

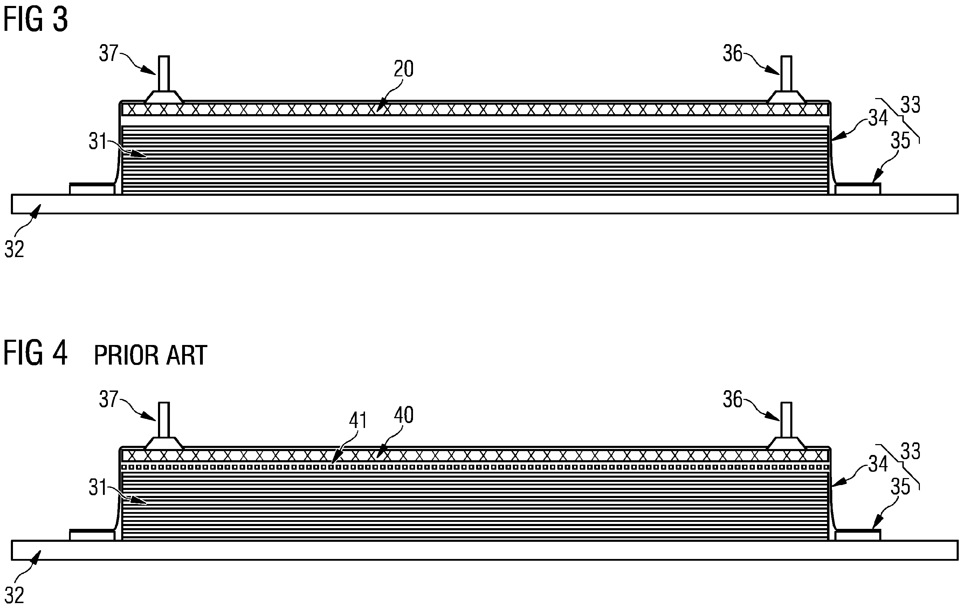

In **Figure 4****,** a simplified vacuum infusion set up for fabricating a composite element according to prior art is shown. In this case, there is a need to use a remove foil 41 to remove the distribution mesh 40 after the curing of the resin used for fabricating the composite element.

Such fabricating method may, however, be disadvantageous, as it requires additional work to place the release fabric and the distribution mesh. Furthermore, the release fabric and the distribution mesh have to be removed as additional waste, which is conventionally not reused. For these reasons, the above method may be seen as particularly costly and environmentally unfriendly.

Another method has been proposed for fabricating composite elements. Such method comprises the use of a distribution mesh made of glass fibers, which is then integrated in the finished composite element. Hereby, the mesh is not removed after fabricating the composite element, which is however not suitable when reduced weight (glass fibers may cause a heavy weight) and material economy are needed.

### Summary of the invention

There may be a need for fabricating a composite element, in particular for a wind turbine, in a (cost-) efficient and environmentally friendly manner.

A distribution mesh, a composite element, a wind turbine, and a manufacture method are described.

According to a first aspect of the present invention, there is described a distribution mesh for fabricating a composite element, wherein the distribution mesh comprises a distribution material comprising at least one epoxy-compatible group and/or a group reactive towards epoxy.

According to a second aspect of the present invention, there is described a composite element comprising at least one distribution mesh, in particular according to the first aspect of the present invention.

According to a third aspect of the present invention, there is described a wind turbine with at least one composite element, in particular according to the second aspect of the present invention.

According to a fourth aspect of the present invention, a method for fabricating a composite element is provided. The method comprises:
i) providing a composite material, in particular dry textile layers forming a stack,
ii) providing a distribution mesh that comprises at least one further epoxy-compatible group and/or a group reactive towards epoxy, and
iii) fabricating the composite element, by embedding (encapsulating) the distribution mesh inside of the composite material and by infusing the composite material and the distribution mesh with a thermosetting material, in particular a resin.

According to a fifth aspect of the present invention, there is described a use (method of using) of a distribution mesh that comprises at least one epoxy-compatible group and/or a group reactive towards epoxy to fabricate a composite element.

In the context of the present document, the term "distribution material", which may also be referred to as flow media, may be seen as a material/part of the distribution mesh. A "distribution mesh" may be applied for allowing a resin to be homogenously distributed to the whole of the composite material during the fabrication process.

Such distribution material may assume different forms in its actual realization, such as, for example, the form of a (distribution) mesh having a rectangular matrix. Such form is however not mandatory and other forms for the distribution mesh might be envisaged.

Also, the distribution material can be fabricated out of or comprise different materials. Preferably, the distribution material is a thermoplastic material, so that procedures well known in the prior art can be used together with the described distribution mesh

According to an exemplary embodiment, the invention may be based on the idea that a composite element, in particular for a wind turbine, may be fabricated in a (cost-) efficient and environmentally friendly manner, when a distribution mesh, that comprises at least one epoxy-compatible group and/or a group reactive towards epoxy, is applied for the manufacture process.

In the context of the present application, "epoxy-compatible group" means a chemical group being which is not reacting with epoxy but which assimilates within the epoxy matrix.

On the other hand, a "group reactive towards epoxy" means that the group has a chemical reaction with epoxy resins, thus allowing a chemical bonding to take place.

By including at least one epoxy-compatible group and/or a group reactive towards epoxy within the distribution material of the distribution mesh, the resin for fabricating the composite element may have an improved binding to the distribution material of the distribution mesh during the curing process of the resin. Thereby, the quality of the finished product and the manufacture process is improved.

Conventionally, the distribution mesh has to be removed after application of the resin. This is because mesh and resin have a low compatibility that would result in a low-quality product.

However, it has been surprisingly found by the inventors that an excellent compatibility may be achieved, when the distribution material comprises at least one epoxy-compatibel group and/or a group reactive towards epoxy. By providing said high compatibility, it has been enabled to efficiently leave the distribution mesh in the resin of the composite part.

In particular, the use of epoxy-compatible groups and/or groups reactive towards epoxy is useful to overcome the incompatibility between being present between a distribution material, which is preferably a thermoplastic material, and the resin, which is normally a thermosetting material. Such difference will lead to microcracks in the finished product, which shorten the lifespan of the composite element itself.

On the contrary, by using epoxy-compatible groups and/or groups reactive towards epoxy, it is possible to have a strong bonding between the distribution material and the resin forming the composite element and to minimize the number of the microcracks at the boundary between the distribution mesh and the resin.

Without wishing to be bound to a specific theory, it is presently assumed that the epoxy-compatible groups and/or groups reactive towards epoxy, during the curing process of the resin, promote at least in parts of the yarn, thus allowing the yarn to dissolve and/or react with the resin matrix.

It is predicted that the resulting composite material has improved mechanical properties and a longer life span, when compared to composite elements known in the prior art.

Furthermore, it is possible in such a way to reduce the weight of the composite element by avoiding the use of glass fibers to form the distribution mesh.

Another advantage is the labor time and cost reduction, as the distribution mesh can be integrated or embedded in the composite element, as explained above. Therefore, the time required for fabricating a composite element diminishes.

Also, when the distribution mesh is integrated or embedded within the composite element, the material waste can be sensibly reduced, thereby being more environmentally friendly.

With the present invention it is therefore possible to use a distribution mesh showing a higher affinity with resins forming composite elements, in particular for wind turbines, thanks to the epoxy compatible and/or epoxy reactive group.

### Exemplary Embodiments

The distribution material comprising at least one epoxy compatible group and/or a group reactive towards epoxy might comprise fibers.

The fibers might be monofilament fibers or multifilament fibers.

The fibers might be arranged in such a way that they build a mesh structure with variable angels and distances on top, inside or underneath a non-crimped fabric (NCF). A NCF is defined as a fabric having two or more fiber layers, which are laid one on top of the other and are not braided with each other but are held together by means of a yarn.

The NCFs can be made of glass-, carbon-, basalt-, natural- or synthetic fibers, whereby NCF comprising different materials are also included in the scope of the invention.

It may also be possible to combine NCF containing at least one epoxy compatible group and/or a group reactive towards epoxy with other textiles, such as woven and non-woven textiles, e.g., glass veils, to use them as a distribution material.

According to an embodiment of the invention, the fibers forming the distribution material might be arranged in a monodirectional, a bidirectional or a multidirectional layer. A layer is monodirectional when all fibers are arranged along one main direction of extension. A layer is bidirectional, when the fibers are arranged along two main directions of extension. A layer is multidirectional, when the fibers are arranged along three or more directions of extension.

Therefore, according to an embodiment of the invention, the distribution material may be arranged as a mesh having a rectangular or square mesh structure. Other mesh structures are also encompassed by the present invention.

According to an embodiment of the invention, an angle between the first and the second direction is comprised between the 0° and 90°.

According to another embodiment of the invention, wherein the first fibers and the second fibers define a mesh, and wherein the mesh has a mesh size comprised between 1 to 30 mm.

According to an embodiment of the invention, the distribution mesh further comprises a first reinforcing fiber layer structure, wherein the distribution material is arranged in or on the first reinforcing fiber layer structure. By using a first reinforcing fiber layer, it is possible to improve the stiffness of the distribution mesh.

The first reinforcing fiber layer has to be permeable to resin, in order to allow the resin to distribute to the composite stack.

The distribution material may be arranged either on a top or on a bottom surface of the first reinforcing fiber layer structure.

It may also be the case, that the distribution material is at least partially embedded or integrated in the first reinforcing fiber layer structure.

According to an embodiment of the invention, the first reinforcing fiber layer structure comprises or consists of at least one of the following reinforcing fibers: glass fibers, carbon fibers, basalt fibers, natural fibers or synthetic fibers.

Such fibers are commonly used in the fabrication process of composite elements, thus allowing the use of well-known fibers and material in the production of the composite elements according to the invention.

As the distribution material, the first reinforcing fiber layer structure might also be unidirectional, bidirectional or multidirectional. A bidirectional reinforcing fiber layer is particularly advantageous, as it provides increased mechanical properties along two directions.

According to an embodiment of the invention, an angle between a first direction of the first reinforcing fiber layer structure and the distribution material is comprised between -60° and +60°. Such angle is particularly advantageous for improving the distribution of the resin to the composite stack.

In particular, it has been found that an angle between -60° and +60° is optimal for the distribution of the resin to the composite stack through the distribution stack.

According to a further embodiment of the invention, the distribution mesh further comprises a second reinforcing fiber layer structure. Such second reinforcing fiber layer structure further improves the structural stability of the distribution mesh. Additional fiber layers could be added when it is a demand for the structural properties of the build composite part.

According to an embodiment, the distribution material is arranged, in particular sandwiched, between the first reinforcing fiber layer structure and the second reinforcing fiber layer structure.

In such a way the distribution material is fully supported on both sides from a reinforcing fiber layer structure.

It is also possible to apply the mesh structure on or under the textile structure when this would be an advantage to produce the mesh structure in combination with the supporting fiber structure.

Thus, the composite element has the advantage of having reduced fabrication costs as well as labor and material requirements

In particular, such composite element can be an element of a wind turbine blade. Wind turbine blades need to have high standards regarding their mechanical properties, while having a reduced weight. A turbine blade comprising at least one composite element according to the second aspect of the present invention is particularly advantageous, as it allows to reduce the overall labor and material costs for fabricating the turbine blade, while still granting improved mechanical properties.

According to an embodiment of the present invention, it is provided that the distribution mesh is embedded in the composite element. In such a way, it is possible to fully integrate the distribution mesh within the composite element, thus removing the need for removing the distribution mesh after the fabrication process.

According to a further embodiment, the composite element comprises of a composite material with at least one epoxy-compatible group and/or a group reactive towards epoxy. In such a way it is possible to have a reciprocity between the distribution mesh comprising the epoxy-compatible group and/or a group reactive towards epoxy and the resin making the composite material, thus improving the properties of the composite element.

Thus, according to the fourth aspect of the present invention, it is possible to fabricate a composite material with a distribution mesh comprising at least one epoxy-compatible group and/or a group reactive towards epoxy with the advantages described above.

Preferably, the fabrication method is a vacuum bag fabrication method, in which the composite material in form of a composite stack and the distribution mesh are placed in a vacuum bag, to which vacuum is applied to let resin flow inside the vacuum bag. After the resin is flown inside the vacuum bag, the resin is cured to obtain the composite element. In a last step, the vacuum bag is removed to obtain the finished composite element.

This invention is not only respecting vacuum infusion with a vacuum bag it could also be used for all kind of vacuum and RTM (resin transfer molding) with high pressure infusion procedures.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of a wind turbine according to an exemplary embodiment of the invention.
- Figure 2: shows a distribution mesh according to an exemplary embodiment of the present invention.
- Figure 3: shows a simplified vacuum infusion set up for fabricating a composite element according to an exemplary embodiment of the present invention.
- Figures 4: shows a simplified vacuum infusion set up for fabricating a composite element according to the prior art.
- Figures 5: shows a simplified diagram for fabricating a composite element according to an exemplary embodiment of the present invention.

### Detailed Description of the Drawings

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously, all such spatially relative terms refer to the orientation shown in the figures only for ease of description and are not necessarily limiting as an apparatus according to an embodiment of the invention can assume orientations different than those illustrated in the figures when in use.

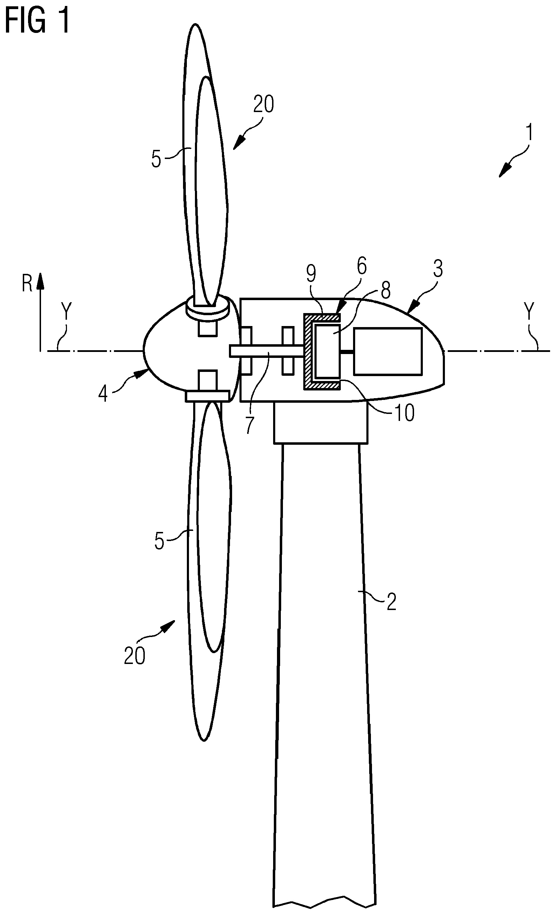

**Figure 1** shows a wind turbine 1. The wind turbine 1 comprises a tower 2, which is mounted on a non-depicted fundament. A nacelle 3 is arranged on top of the tower 2. The wind turbine 1 further comprises a wind rotor 4 having two, three or more blades 5 (in the perspective of **Figure 1** only two blades 5 are visible). The wind rotor 4 is rotatable around a longitudinal rotation axis Y, which is coincident with an axial direction, also referred to as Y. When not differently specified, the terms axial, radial and circumferential in the following are made with reference to the longitudinal axis Y. The blades 5 extend radially in a radial direction R with respect to the rotational axis Y. The wind turbine 1 comprises a permanent magnet electric generator 6. According to other possible embodiments of the present invention (not represented in the attached figures), the present invention may be applied to other types of electric machine design, e.g. induction, synchronous, etc. The wind rotor 4 is rotationally coupled with the permanent magnet generator 6 by means of a rotatable main shaft 7. The rotatable main shaft 7 extends along the rotational axis Y. The wind rotor 4 may also be rotationally coupled directly with the permanent magnet generator 6 (direct-drive generator configuration). The permanent magnet electric generator 6 includes a stator 8 and a rotor 9. The rotor 9 is rotatable with respect to the stator 8 about the rotation axis Y. The rotor 9 is radially external with respect the stator 8 and rotatable about the rotational axis Y. The present invention may however also include not-shown embodiments in which the rotor 9 is radially internal with respect to the stator 8. A circumferential air gap 10 is provided between the stator 8 and the rotor 9. The three or more blades 5 comprise each a composite element with an embedded distribution mesh 20. The manufacture of said composite element is described in detail in the following.

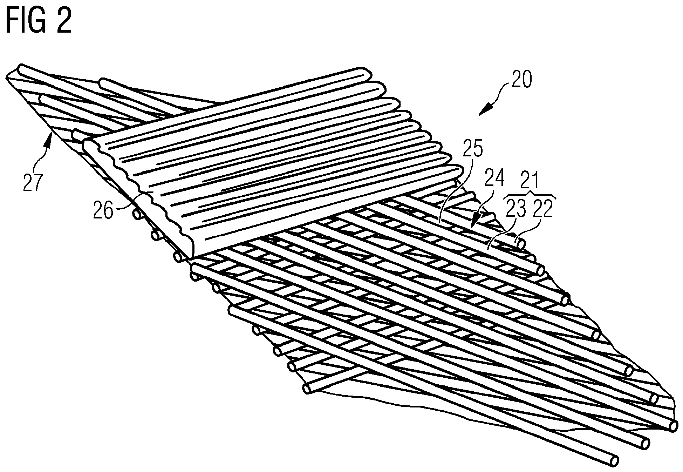

**Figure 2** shows a distribution mesh 20 according to an exemplary embodiment of the present invention. The distribution mesh 20 comprises a distribution material 21, consisting in this example of a bidirectional distribution material having first fibers 22 arranged along a first direction and second fibers 23 arranged along a second direction. The first fibers 22 and the second fibers 23 form therefore a mesh 24.

The first fibers 22 and the second fibers 23 are arranged perpendicularly to each other, i.e. an angle between the first direction of the first fibers 22 and a second direction of the second fibers 23 is 90°. The mesh 24 has therefore a rectangular, in particular square, matrix elements 25.

The distribution material 21 is sandwiched between a first reinforcing fiber layer structure 26 and a second reinforcing fiber layer structure 27. The first reinforcing fiber layer structure 26 and the second reinforcing fiber layer structure 27 provide improved mechanical stability to the distribution mesh 20.

The first reinforcing fiber layer structure 26 and the second reinforcing fiber layer structure 27 are both monodirectional and comprise in this example glass fibers. They can however also comprise fibers of different materials, such as carbon fibers, basalt fibers, natural fibers or synthetic fibers.

The first reinforcing fiber layer structure 26 and the second reinforcing fiber layer structure 27 are angled with respect to the first fibers 22 and the second fibers 23. In particular, the angle is comprised between -60° and +60° to optimize the flow of the resin through the distribution mesh 20.

**Figure 3** shows a simplified vacuum infusion set up for fabricating a composite element according to an exemplary embodiment of the present invention.

In **Figure 3** a composite stack 31 is placed on a mold 32. A distribution mesh 20 as described above is then placed on top of the composite stack 31.

A vacuum bag 33, comprising a vacuum foil 34 and sealing tape 35, is used for sealing the distribution mesh 20, the composite stack 31 and the mold 32.

The vacuum foil 34 has a vacuum plug 37 configured for being connected to a vacuum pump (not shown) and a resin inlet 36. When vacuum is applied to the vacuum plug 37, resin flows from the resin inlet 36 inside the vacuum bag 33. The resin is distributed through the distribution mesh 20 in a homogenous manner over the composite stack 31.

When the required amount of resin is flown in and the composite stack 31 is well impregnated with the resin, the resin is cured to obtain a composite element. In said composite element, the distribution mesh 20 is embedded and is, therefore, part of the composite element.

Therefore, there is no need to remove the distribution mesh 20 after curing, as this is the case in the prior art. Thus, there is a significant amount of time, material and resources being saved by fabricating the composite element with a distribution mesh according to the present invention.

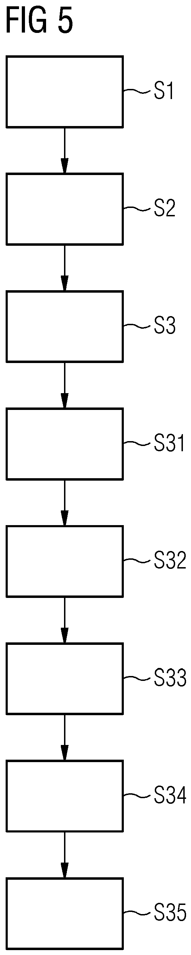

In **Figure 5****,** a simplified diagram for fabricating a composite element according to an exemplary embodiment of the present invention is shown. Reference signs can refer to the Figures described above.

In a first step S1, a composite material, in particular dry textile layers, is provided. The dry textile layers are forming a textile stack 31 which will be infused in the following steps with a thermoset resin

In a second step S2, a distribution mesh 20 comprising at least one epoxy-compatible group and/or a group reactive towards epoxy is provided.

In a step S3, a composite element is fabricated, thereby embedding the distribution mesh inside of the composite element.

The step S3 may include further steps.

For example, a step S31 might be provided for arranging the distribution mesh 20 on top, underneath or in between the composite stack 31.

A further optional step S32 is to enclose the composite stack 31 and the distribution mesh 20 in a vacuum bag 33 with a vacuum foil 34 and sealing tape 35.

It should also be mentioned that a VAP-membrane (semipermeable membrane) could be used on top of the stack 31 and the distribution mesh 20 could be used to ensure a stable infusion process.

In particular, the vacuum foil 34 might comprise a vacuum plug 37 and a resin inlet 36. The vacuum plug 37 is configured for being connected to a vacuum pump (not shown) to apply vacuum to the vacuum 33.

When vacuum is applied (step S33), resin flows in from the resin inlet 36 and gets distributed through the distribution mesh to the composite stack 31.

In a step S34 the resin is cured to form the composite element with the embedded distribution mesh 20.

In a final step S35 the vacuum bag 33 is removed to obtain the finished composite element.

## Claims

1. Distribution mesh (20) for fabricating a composite element, wherein the distribution mesh (20) comprises a distribution material (21) comprising at least one epoxy-compatible group and/or a group reactive towards epoxy.

2. Distribution mesh (20) according to claim 1, wherein the distribution material (21) is formed into fibers (22, 23).

3. Distribution mesh (20) according to claim 2, wherein the fibers (22, 23) are mono- or multifilament fibers.

4. Distribution mesh (20) according to claim 3,
wherein the distribution material (21) comprises first fibers (22) arranged along a first direction and second fibers (23) arranged along a second direction, and wherein:
an angle between the first and the second direction is comprised between the 0° and 90°; and/or
wherein the first fibers (22) and the second fibers (23) define a mesh (24), and wherein the mesh (24) has a mesh size comprised between 1 to 30 mm.

5. Distribution mesh (20) according to any of the claims 1 to 4, wherein the distribution mesh (20) further comprises a first reinforcing fiber layer structure (26); and
wherein the distribution material (21) is arranged in or on the first reinforcing fiber layer structure (26).

6. Distribution mesh (20) according to claim 5, wherein the first reinforcing fiber layer structure (26) comprises or consists of at least one of the following reinforcing fibers: glass fibers, carbon fibers, basalt fibers, natural fibers and synthetic fibers.

7. Distribution mesh (20) according to one of claims 5 or 6, wherein the first reinforcing fiber layer structure (26) is configured unidirectional, bidirectional or multiaxial.

8. Distribution mesh (20) according to one of the claims 5 to 7, wherein an angle between a first direction of the first reinforcing fiber layer structure (26) and the distribution material (21) is comprised between -60° and +60°, preferably -30° and +30°.

9. Distribution mesh (20) according to one of the claims 5 to 8, wherein the distribution mesh (21) further comprises a second reinforcing fiber layer structure (27), and
wherein the distribution material (21) is arranged, in particular sandwiched, between the first reinforcing fiber layer structure (26) and the second reinforcing fiber layer structure (27).

10. Composite element comprising at least one distribution mesh (20) according to one of the claims 1 to 9.

11. Composite element according to claim 10, wherein the distribution mesh (20) is embedded in the composite element.

12. Composite element according to claim 10 or 11, wherein the composite element is an element of a wind turbine blade (5) .

13. Wind turbine (1) comprising at least one composite element according to any of the claims 10 to 12.

14. Method for fabricating a composite element, the method comprising:
providing a composite material (31), in particular dry textile layers forming a stack;
providing a distribution mesh (20) that comprises at least one epoxy-compatible group and/or a group reactive towards epoxy; and
fabricating the composite element, by embedding the distribution mesh (20) inside of the composite material (31) and by infusing the composite material (31) and the distribution mesh (20) with a thermosetting material, in particular a resin.

15. Use of a distribution mesh (20) that comprises at least one epoxy-compatible and/or a group reactive towards epoxy group to fabricate a composite element.
